# EUROPEAN PATENT APPLICATION

(11) **EP 1 919 058 A2**
(43) Date of publication of application: **07.05.2008**
(21) Application number: 07019991.4
(22) Date of filing: 12.10.2007
(51) Int. Cl.: H02J 7/00

(54) **Power management system with charger and boost converter**

(30) Priority: 01.11.2006 US 856075 P; 04.10.2007 US 906920
(71) Applicant: O2 Micro, Inc., Santa Clara, CA 95054 (US)
(72) Inventor: Lipcsei, Laszlo, Campbell CA 95008 (US)
(74) Representative: Jungen, Rolf

(57) **Abstract**

A power management system comprises a power conversion stage and a controller. The power conversion stage has two terminals. The first terminal is coupled to a first power source which provides a first voltage. The second terminal is selectively coupled to a second power source which provides a second voltage. The controller coupled to the power conversion stage can select a mode from at least a first mode and a second mode. In the first mode, the power conversion stage receives the first voltage at the first terminal and generates a step-up voltage at the second terminal. The generated step-up voltage is greater than the first voltage. In the second mode, the power conversion stage receives the second voltage at the second terminal and generates a step-down voltage at the first terminal for charging the first power source. The generated step-down voltage is less than the second voltage.

## Description

### RELATED APPLICATION

This application claims priority to U.S. Provisional Application No. 60/856,075, filed on November 01, 2006, which is hereby incorporated by reference in its entirety.

### TECHINICAL FIELD

This invention relates to power management system, and in particular to power management systems with charger/boost controllers.

### BACKGROUND ART

Nowadays, Lithium-lon battery cell technologies involve increasingly higher powered density cells. However, such higher powered density cells feature decreased minimum discharge cell voltage (e.g., to 2.2V). For example, a portable device powered by a 2-cell Lithium-lon battery encounters challenges in generating an output voltage of 5V from the 2-cell Lithium-lon battery, since the battery voltage of the 2-cell Lithium-lon battery may range from 4.4V to 8.4V. Therefore, a new buck-boost converter is required to replace the buck converter in order to reliably generate an output voltage of 5V.

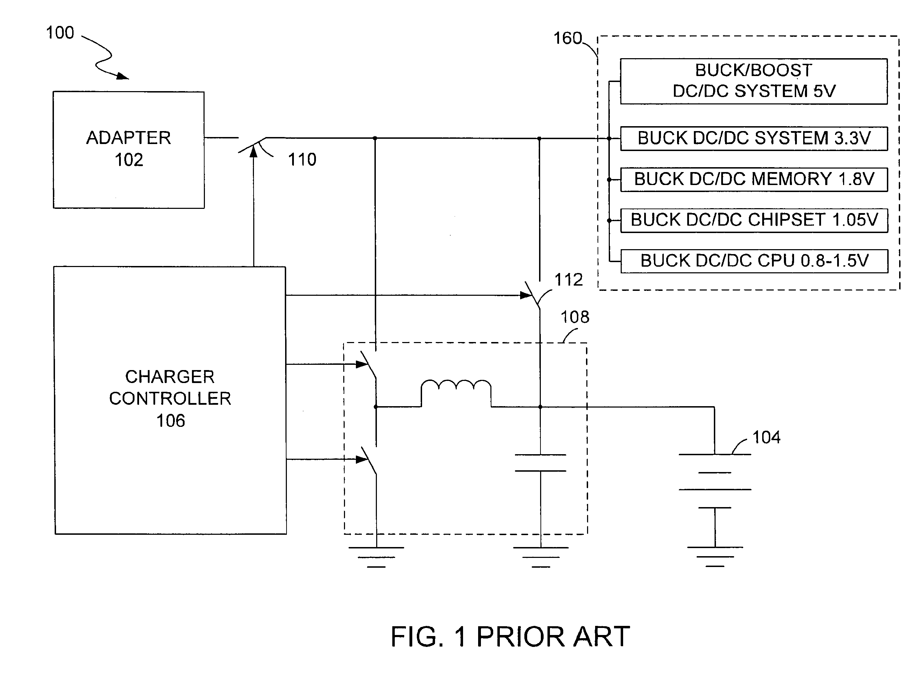

FIG. 1 shows a typical power topology 100 of an UMPC (Ultra-Mobile PC) note book using a Lithium-lon battery, in accordance with the prior art. As shown in FIG. 1, the power topology 100 includes an adapter 102, a Lithium-Ion battery 104, a charger controller 106, a charger 108, a plurality of system loads 160, a switch 110 coupled between the adapter 102 and system loads 160, and a switch 112 coupled between the battery 104 and system loads 160. If the adapter 102 is available, the adapter 102 can power the plurality of system loads 160 by switching on the switch 110 controlled by the charger controller 106. The adapter 102 also charges the battery 104 via the charger 108 controlled by the charger controller 106. If the adapter 102 is not available, the battery 104 can power the system load 160 by switching on the switch 112 controlled by the charger controller 106. The battery 104 includes 2 Lithium-Ion cells and has a voltage ranged from 4.4V to 8.4V. As a result, a buck/boost converter is required in order to generate a required system voltage of 5V.

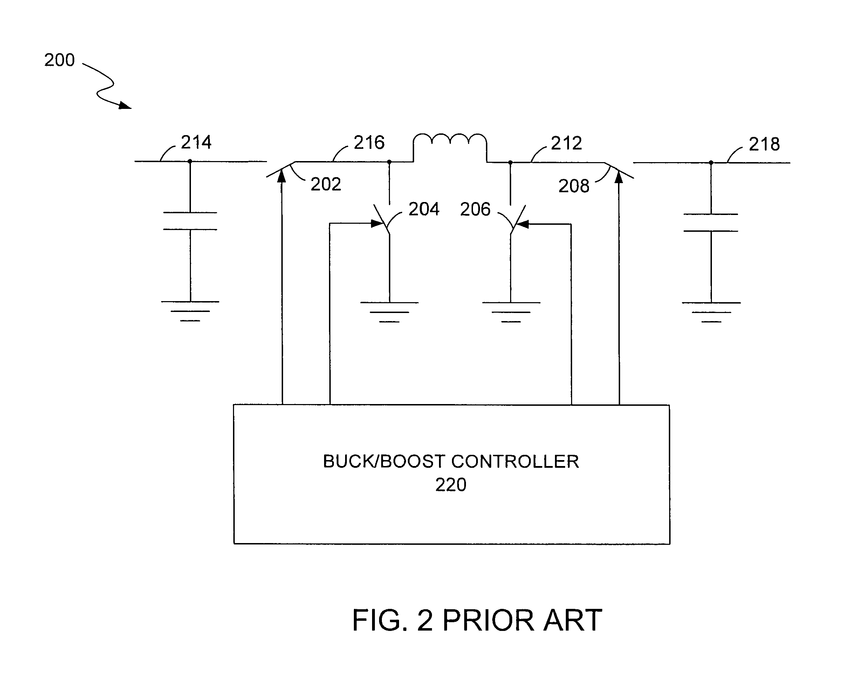

FIG. 2 shows a typical buck/boost converter 200 implemented in FIG. 1, in accordance with the prior art. As shown in FIG. 2, in a buck mode, the buck/boost converter 200 can generate a step-down voltage 212 that is less than an input voltage 214 by switching on a switch 202 and a switch 204 alternatively. In a boost mode, the buck/boost converter 200 can generate a step-up voltage 216 that is greater than an input voltage 218 by switching on a switch 206 and a switch 208 alternately. Such buck/boost converter 200 requires a plurality of switches, which increases the cost and reduces the system efficiency. In addition, when the buck/boost converter 200 works in the buck mode, the switch 208 is always kept on, which causes excessive power loss. Similarly, when the buck/boost converter 200 works in boost mode, the switch 202 is always kept on, which also causes excessive power loss. Furthermore, during the transition stage when the input voltage is almost equal to the output voltage, all the switches 202, 204, 206 and 208 will in operation, which also reduce the overall conversion efficiency.

### SUMMARY

In one embodiment, a power management system comprises a power conversion stage and a controller. The power conversion stage has two terminals. The first terminal is coupled to a first power source which provides a first voltage. The second terminal is selectively coupled to a second power source which provides a second voltage. The controller coupled to the power conversion stage can select a mode from at least a first mode and a second mode. In the first mode, the power conversion stage receives the first voltage at the first terminal and generates a step-up voltage at the second terminal. The step-up voltage generated at the second terminal is greater than the first voltage. In the second mode, the power conversion stage receives the second voltage at the second terminal and generates a step-down voltage at the first terminal for charging the first power source. The step-down voltage generated at the first terminal is less than the second voltage.

### BRIEF DESCRIPTION OF THE DRAWINGS

Features and advantages of embodiments of the claimed subject matter will become apparent as the following Detailed Description proceeds, and upon reference to the drawings, wherein like numerals depict like parts, and in which:

FIG. 1 shows a power topology of an UMPC note book using a Lithium-lon battery, in accordance with the prior art.

FIG. 2 shows a buck/boost converter implemented in FIG. 1, in accordance with the prior art.

FIG. 3 shows a topology of a power management system, in accordance with one embodiment of the present invention.

FIG. 4 shows another topology of a power management system, in accordance with one embodiment of the present invention.

FIG. 5A shows another topology of a power management system, in accordance with one embodiment of the present invention.

FIG. 5B shows another topology of a power management system, in accordance with one embodiment of the present invention.

FIG. 6 shows another topology of a power management system, in accordance with one embodiment of the present invention.

FIG. 7 shows a flowchart of operations performed by a power management system, in accordance with one embodiment of the present invention.

FIG. 8 shows a flowchart of operations performed by a power management system, in accordance with one embodiment of the present invention.

### DETAILED DESCRIPTION

Reference will now be made in detail to the embodiments of the present invention. While the invention will be described in conjunction with these embodiments, it will be understood that they are not intended to limit the invention to these embodiments. On the contrary, the invention is intended to cover alternatives, modifications and equivalents, which may be included within the spirit and scope of the invention as defined by the appended claims.

Furthermore, in the following detailed description of the present invention, numerous specific details are set forth in order to provide a thorough understanding of the present invention. However, it will be recognized by one of ordinary skill in the art that the present invention may be practiced without these specific details. In other instances, well known methods, procedures, components, and circuits have not been described in detail as not to unnecessarily obscure aspects of the present invention.

In one embodiment, the present invention provides a power management system for Lithium-lon batteries with one or more cells. In one such embodiment, the power management system includes a power conversion stage, and a controller which can control the power conversion stage. Advantageously, the power conversion stage controlled by the controller can operate as a boost converter (e.g., a switch mode boost converter) or a charger (e.g., a switch mode buck converter). In one such embodiment, the power management system also includes a first power source (e.g., a battery pack) and a second power source (e.g., an adapter). In a first mode, the first power source can power a system load via the power conversion stage and the power conversion stage operates as a boost converter. In a second mode, the second power source can charge the first power source via the same power conversion stage and the power conversion stage operates as a charger. As a result, no extra boost converter is needed, in one embodiment.

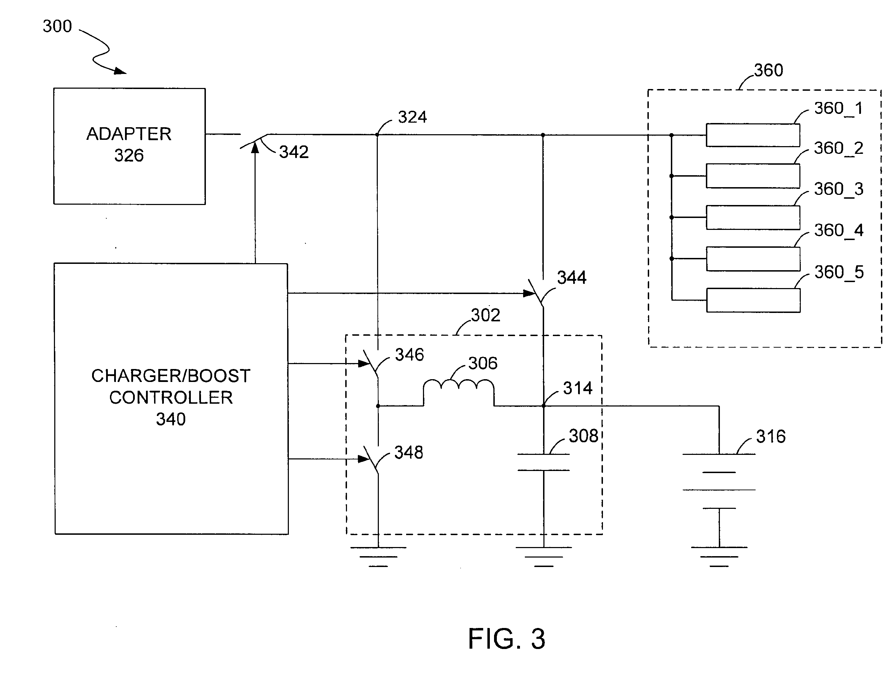

FIG. 3 shows a topology of a power management system 300, in accordance with one embodiment of the present invention. The power management system 300 includes a power conversion stage 302, which has a first terminal 314 and a second terminal 324, in one embodiment. The first terminal 314 is coupled to a first power source 316. In one embodiment, the first power source 316 can be a battery pack which provides a first voltage (battery voltage V_{BAT}). In one embodiment, the second terminal 324 can be coupled to a second power source 326 by turning on a switch 342 which is coupled between the second terminal 324 and the second power source 326. In one embodiment, the second power source 326 can be an adapter having a second voltage (adapter voltage V_{AD}) as shown in FIG. 3. The second power source 326 can also include other power sources such as a universal serial bus (USB) device.

In one embodiment, a charger/boost controller 340 can control the power management system 300 to work in different modes. More specifically, the charger/boost controller 340 coupled to the power conversion stage 302 can select a mode from at least a first mode and a second mode. In the first mode (low battery powering mode), the charger/boost controller 340 can control the power conversion stage 302 to operate as a boost converter. More specifically, the power conversion stage 302 receives the first voltage (battery voltage V_{BAT}) at the first terminal 314 from the battery pack 316 and generates a step-up voltage at the second terminal 324 for powering a plurality of system loads 360. In one embodiment, the generated step-up voltage is greater than the first voltage V_{BAT}. In the second mode (adapter powering mode), the charger/boost controller 340 can control the power conversion stage 302 to operate as a charger (buck converter). More specifically, the power conversion stage 302 receives the second voltage (adapter voltage V_{AD}) at the second terminal 324 and generates a step-down voltage at the first terminal 314 for charging the battery pack 316. In one embodiment, the generated step-down voltage is less than the second voltage V_{AD}.

As shown in FIG. 3, in one embodiment, the power conversion stage 302 can comprise an inductor 306 coupled to a capacitor 308, a high side switch 346 coupled to the second terminal 324, and a low side switch 348 coupled between the high side switch 346 and ground. More specifically, the power conversion stage 302 can operate by turning on the high side switch 346 and the low side switch 348 alternately, which is controlled by the charger/boost controller 340.

In one embodiment, the power management system 300 can be used to power the plurality of system loads 360 working at different voltages (e.g., ranged from 0.8V to 5V). As a result, a buck converter can be implemented to generate a desired voltage (e.g., ranged from 0.8V to 5V) for each system load. For example, in a computer system, a buck converter 360_1 can be implemented to generate a desired voltage for powering a 5V system, a buck converter 360_2 can be implemented to generate a desired voltage for powering a 3.3V system, a buck converter 360_3 can be implemented to generate a desired voltage for powering a 1.8V memory, a buck converter 360_4 can be implemented to generate a desired voltage for powering a 1.05V chipset, and a buck converter 360_5 can be implemented to generate a desired voltage for powering a 0.8-1.5V CPU.

In one embodiment, when the power management system 300 works in the first mode (low battery powering mode), the power conversion stage 302 can operate as a boost converter which receives the first voltage (battery voltage V_{BAT}) at the first terminal 314 and generates a step-up voltage at the second terminal 324. As such, the battery pack 316 can be used to power the plurality of system loads 360 via the second terminal 324. More specifically, in the first mode, when the switch 346 is off and the switch 348 is on, the inductor 306 is connected to ground and the battery pack 316 can store energy in the inductor 306. When the switch 346 is on and the switch 348 is off, the inductor 306 is connected to the plurality of system loads 360 to discharge current to the plurality of system loads 360, such that the step-up voltage generated at the second terminal 324 is greater than the first voltage V_{BAT} at the first terminal 314. Therefore, the power conversion stage 302 can operate as a booster converter by switching on the switch 346 and the switch 348 alternately in the first mode. In one embodiment, the step-up voltage generated by the power conversion stage 302 from the battery pack 316 is greater than a predetermined voltage V_{PRE} (e.g., 5.4V).

In one embodiment, when the power management system 300 works in the second mode (adapter powering mode, switch 342 is on), the adapter 326 can power the plurality of system loads 360 via the second terminal 324, and the power conversion stage 302 can operates as a charger to receive the second voltage (adapter voltage V_{AD}) and to generate a step-down voltage to charge the battery pack 316. As a result, the adapter 326 not only powers the plurality of system loads 360 but also charges the battery pack 316. More specifically, in the second mode, when the switch 346 is on and the switch 348 is off, the adapter 326 is connected to the inductor 306 to store energy in the inductor 306, and provides charging current to the battery pack 316. When the switch 346 is off and the switch 348 is on, the inductor 306 is connected to the battery pack 316, and the stored energy in the inductor 306 continues to provide charging current to the battery pack 316. As such, the step-down voltage generated at the first terminal 314 is less than the second voltage V_{AD} at the second terminal 324. Therefore, the power conversion stage 302 can operate as a charger (buck converter) by switching on the switch 346 and the switch 348 alternately in the second mode.

Furthermore, in one embodiment, the power management system 300 can also work in a third mode (high battery powering mode, switch 344 is on), in which the charger/boost controller 340 is not in operation and the battery pack 316 can be used to power the plurality of system loads 360 via the first terminal 314 directly.

In operation, when the adapter 326 is available, the charger/boost controller 340 can select the second mode, in which the adapter 326 can power the plurality of system loads 360 by turning on the switch 342 coupled between the adapter 326 and the second terminal 324. In one embodiment, the switch 342 can be controlled by the charger/boost controller 340. In addition, the charger/boost controller 340 can control the power conversion stage 302 to receive the adapter voltage V_{AD} and to generate an appropriate step-down voltage that is less than the adapter voltage V_{AD} for charging the battery pack 316. In one embodiment, when the adapter 326 is not available and the battery voltage V_{BAT} is greater than a predetermined voltage V_{PRE}, the charger/boost controller 340 can select the third mode, in which the battery pack 316 can power the plurality of system loads 360 via the first terminal 314 by turning on a switch 344 coupled between the battery pack 316 and the plurality of system loads 360. In one embodiment, the switch 344 can be controlled by the charger/boost controller 340. In one embodiment, when the adapter 326 is not available and the battery voltage V_{BAT} is less than the predetermined voltage V_{PRE}, the charger/boost control can select the first mode, in which the charger/boost controller 340 can control the power conversion stage 302 to receive the battery voltage V_{BAT} and to generate a step-up voltage that is greater than V_{PRE} to power the plurality of system loads 360 via the second terminal 324.

Advantageously, in one embodiment, the plurality of system loads 360 can be powered even when the adapter 326 is not available and the battery voltage V_{BAT} drops below a minimum required system voltage (e.g., 5V for a minimum required system voltage). Since the single power conversion stage 302 controlled by the charger/boost controller 340 can be used as a charger or a boost converter, no extra boost converters are needed to for powering the plurality of system loads 360, and no additional power switches are needed.

In one embodiment, the switch 344 is optional. In the third mode, the battery pack 316 can power the plurality of system loads via the inductor 306 and the switch 346 instead of the switch 344, in one embodiment.

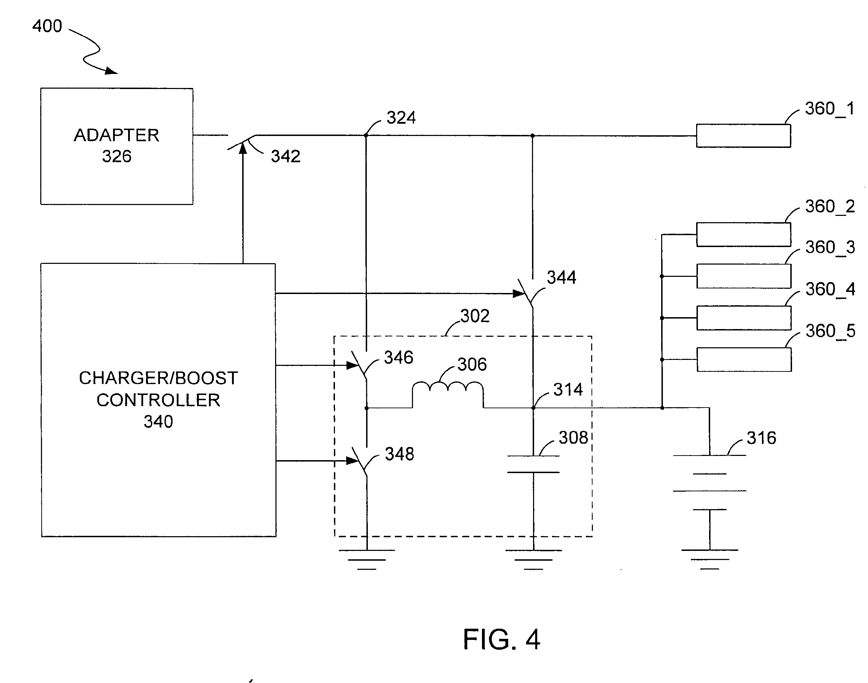

FIG. 4 shows another topology of a power management system 400, in accordance with one embodiment of the present invention. Elements that are labeled the same as in FIG. 3 have similar functions and will not be repetitively described herein for purposes of brevity and clarity. As shown in FIG. 4, in one embodiment, the buck converter 360_1 can be coupled to the adapter 326 via the switch 342 and can also be coupled to the battery pack 316 via the switch 344. The power conversion stage 302 is coupled between the battery pack 316 and the buck converter 360_1. In FIG. 4, the plurality of buck converters 360_2-360_5 is coupled to the battery pack 316 directly.

In one embodiment, the buck converter 360_1 can be powered by the adapter 326 via the switch 342. In one embodiment, the buck converter 360_1 can also be powered by the battery pack 316 via the switch 344 or via the inductor 306 and the switch 346. In one embodiment, the plurality of buck converters 360_2-360_5 can be powered by the battery pack 316 directly.

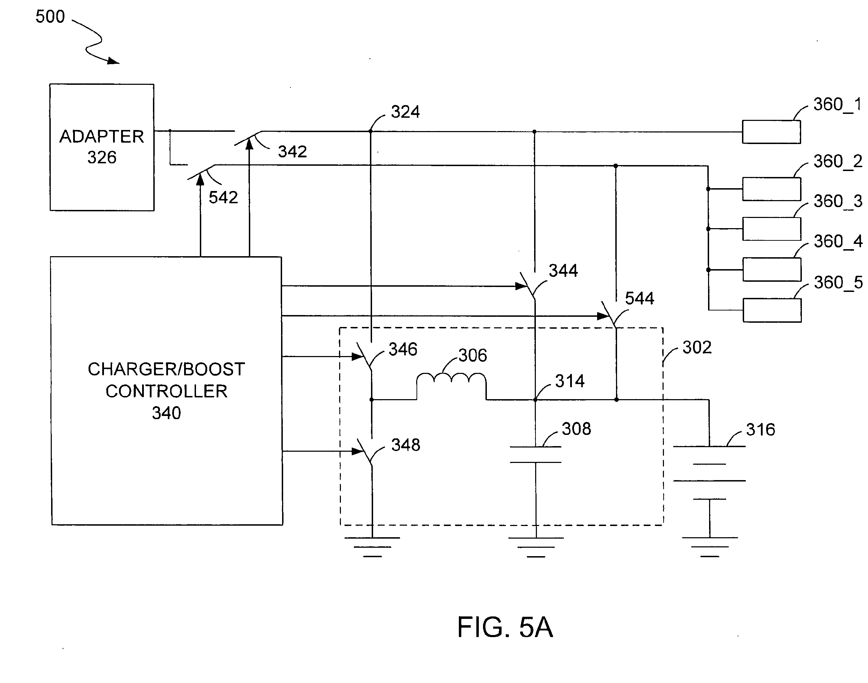

FIG. 5A shows another topology of a power management system 500, in accordance with one embodiment of the present invention. Elements that are labeled the same as in FIG. 3 and FIG. 4 have similar functions and will not be repetitively described herein for purposes of brevity and clarity. In one embodiment, the power management system 500 in FIG. 5A further reduces power loss, in one embodiment. As shown in FIG. 5A, in one embodiment, the buck converter 360_1 can be coupled to the adapter 326 via the switch 342 and can also be coupled to the battery pack 316 via the switch 344. In one embodiment, the plurality of buck converters 360_2-360_5 can be coupled to the adapter 326 via a switch 542 and can also be coupled to the battery pack 316 via a switch 544. In one embodiment, switches 342, 344, 542 and 544 can be controlled by the charger/boost controller 340.

In one embodiment, when the adapter 326 is available, the adapter 326 can power the buck converter 360_1 via the switch 342 and power buck converters 360_2-360_5 via the switch 542. Advantageously, the adapter current path can be divided by the switch 342 and the switch 542, which helps further reduce power loss compared with the case when the entire adapter current passes one switch as shown in FIG. 4, in one embodiment.

In one embodiment, when the adapter 326 is not available and the battery voltage V_{BAT} is greater than the predetermined voltage V_{PRE}, the battery pack 316 can power the buck converter 360_1 via the switch 344 and power buck converters 360_2-360_5 via the switch 544. Advantageously, the battery current path can be divided by the switch 344 and the switch 544, which also helps further reduce power loss as compared with the case when the entire battery current passes through one switch as shown in FIG. 4, in one embodiment.

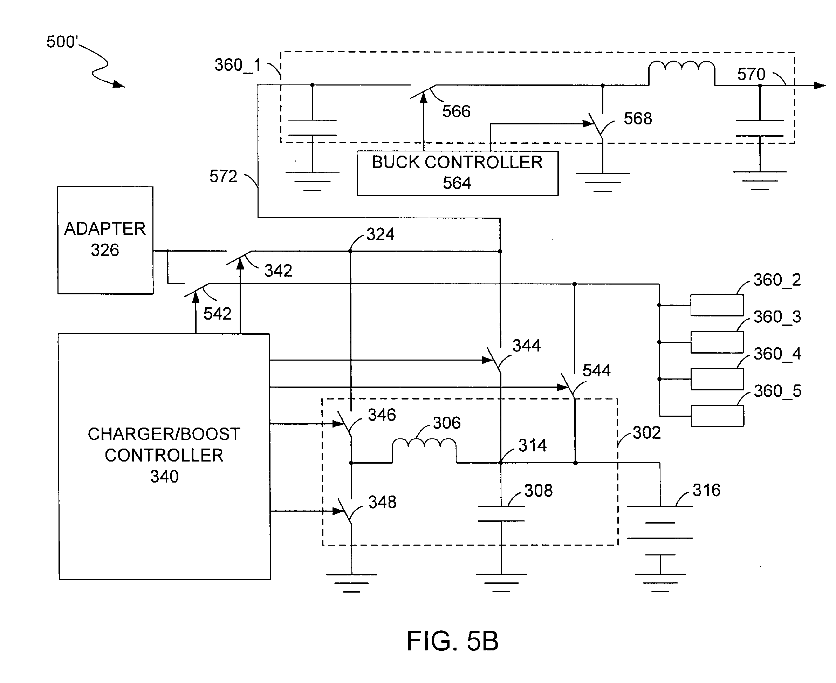

FIG. 5B shows another topology of a power management system 500', in accordance with one embodiment of the present invention. Elements that are labeled the same as in FIG. 3, FIG. 4, and FIG. 5A have similar functions and will not be repetitively described herein for purposes of brevity and clarity. As shown in FIG. 5B, the buck converter 360_1 and a buck controller 564 are implemented to generate a desired voltage (step-down voltage) at the terminal 570 to power a system load (e.g., a 5V system load). More specifically, in one embodiment, the buck controller 564 can control the buck converter 360_1 to generate the desired step-down voltage at the terminal 570 by turning on the switch 566 and the switch 568 alternately. In one embodiment, the desired step-down voltage is less than an input voltage 572. Buck converters 360_2-360_5 can have similar configurations as the buck converter 360_1 and will not be repetitively described herein for purposes of brevity and clarity.

In order to reduce/avoid incompatibilities between the charger/boost controller 340 and the buck controller 564, both controllers can be integrated into a single chip. In addition, in one embodiment, each charger/boost controller 340 and buck controller 564 may require a low dropout regulator (LDO). For instance, the charger/boost controller 340 may use a 5V/100mA LDO and the buck controller 564 may use a 5V/20mA LDO. By integrating the charger/boost controller 340 and the buck controller 564 into a single chip, only one LDO may be required. Therefore, the integrated chip may only need a single LDO with higher current, such as a 5V/120mA LDO, which may further reduce the cost.

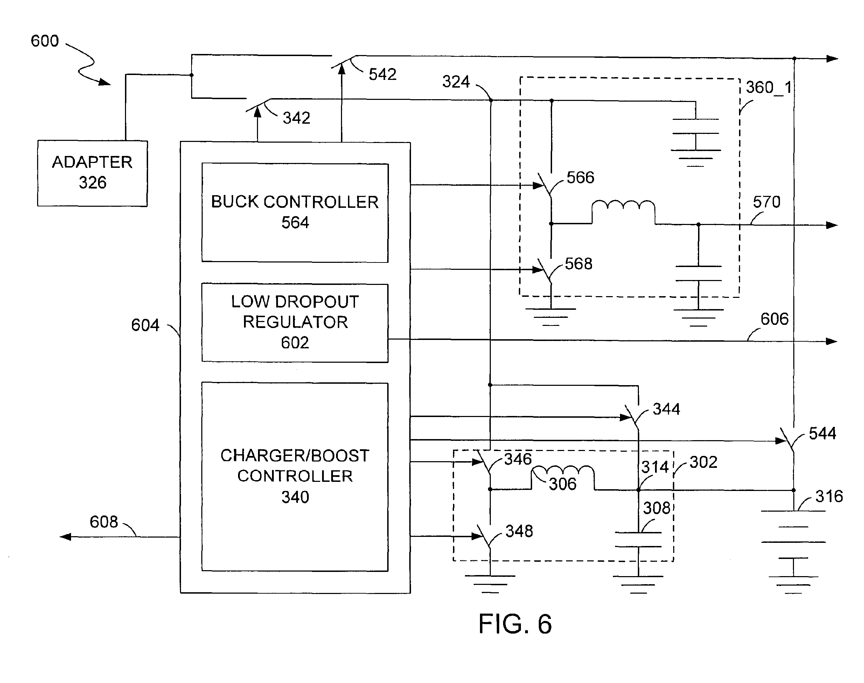

FIG. 6 shows another topology of a power management system 600, in accordance with one embodiment of the present invention. Elements that are labeled the same as in FIG.3, FIG. 4, FIG. 5A, and FIG. 5B have similar functions and will not be repetitively described herein for purposes of brevity and clarity. As shown in FIG. 6, a charger/boost controller 340, a buck controller 564 and a low dropout regulator 602 are integrated in a single chip 604, which may avoid incompatibilities between the charger/boost controller 340 and the buck controller 564 and reduce the cost. In one embodiment, a constant voltage 606 generated by the low dropout regulator 602 can be used to power other modules.

In one embodiment, when the adapter 326 is not available and the battery voltage V_{BAT} is less than the predetermined voltage V_{PRE}, the integrated chip 604 can generate a low battery signal 608. By receiving the low battery signal 608, the power management system 600 can reduce the system power to a minimum level in response to the low battery signal 608, and the charger/boost controller 340 can control the power conversion stage 302 to operate as a boost converter and generate a step-up voltage for powering the buck converter 360_1.

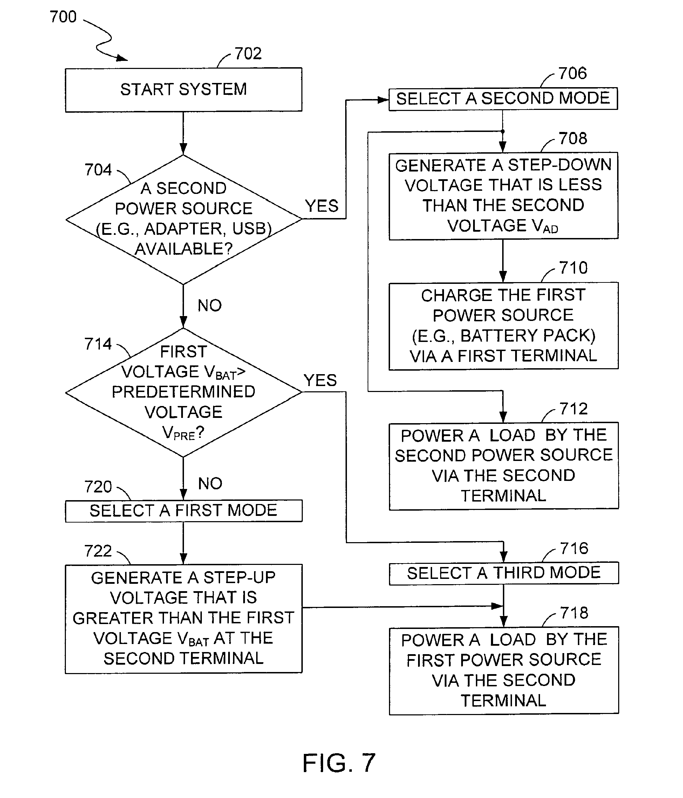

FIG. 7 shows a flowchart 700 of operations performed by a power management system, in accordance with one embodiment of the present invention. In one embodiment, the charger/boost controller 340 can be configured, such that the power management system mentioned above can operate in a way shown in flowchart 700. FIG. 7 is described in combination with FIG. 3, FIG. 4, FIG. 5A, FIG. 5B, and FIG. 6.

In block 702, the power management system is started. After the power management system is started, the flowchart 700 goes to block 704. In block 704, the power management system monitors whether a second power source 326 is available for selecting a mode from at least a first mode and a second mode. In one embodiment, the second power source 326 can be an adapter (as shown in FIG. 3) which has a second voltage (adapter voltage V_{AD}). However, the second power source 326 can also include other power sources such as a universal serial bus (USB) device.

In one embodiment, if the second power source 326 is available, the flowchart 700 goes to block 706. In one embodiment, in the second mode, the second power source 326 can power at least one system load (shown in block 712) and charge a first power source 316 (shown in block 708 and 710). In one embodiment, the first power source 316 can be a battery pack which has at least one battery cell.

In block 708, a power conversion stage 302 which has a first terminal 314 and a second terminal 324 can receive the second voltage (adapter voltage V_{AD}) at the second terminal 324 and generate an appropriate step-down at the first terminal 314. In one embodiment, the generated step-down voltage is less than the second voltage V_{AD} and can be used to charge the first power source 316 (battery pack 316) via the first terminal 314 as shown in block 710.

In bock 712, the second power source 326 can be used to power a load (e.g., a plurality of system loads 360) via the second terminal 324. For example, as shown in FIG. 3, the adapter 326 is selectively coupled to the second terminal 324 and can power the plurality of system loads 360 by turning on a switch 342 controlled by the charger/boost controller 340.

Returning to block 704 in FIG. 7, if the second power source 326 is not available, the flowchart 700 goes to block 714. In block 714, the power management system monitors the first voltage V_{BAT} from the first power source (battery pack) 316. If the first voltage V_{BAT} is greater than a predetermined threshold voltage V_{PRE}, the flowchart 700 goes to block 716.

In block 716, the charger/boost controller 340 can select a third mode, in which the first power source 316 (battery pack) can power a load (e.g., a plurality of system loads 360) directly. For example, as shown in FIG. 3, the battery pack 316 can power the plurality of system loads 360 directly by turning on a switch 344 controlled by the charger/boost controller 340. Returning to FIG. 7, the flowchart 700 goes to block 718, in which the first power source 316 powers a load (e.g., a plurality of system loads 360) via the second terminal 324, in one embodiment.

Returning to the block 714, if the first voltage (battery voltage V_{BAT}) is not greater than the predetermined voltage V_{PRE}, the flowchart 700 goes to block 720. In block 720, the charger/boost controller 340 selects a first mode and the flowchart 700 goes to block 722.

In block 722, the power conversion stage 302 receives the first voltage V_{BAT} at the first terminal 314 and generates a step-up voltage at the second terminal 324 for powering the plurality of system loads 360. In one embodiment, the generated step-up voltage is greater than the first voltage V_{BAT}. Consequently, the step-up voltage generated by the power conversion stage 302 from the first power source 316 can power a load (e.g., a plurality of system loads) via the second terminal 324.

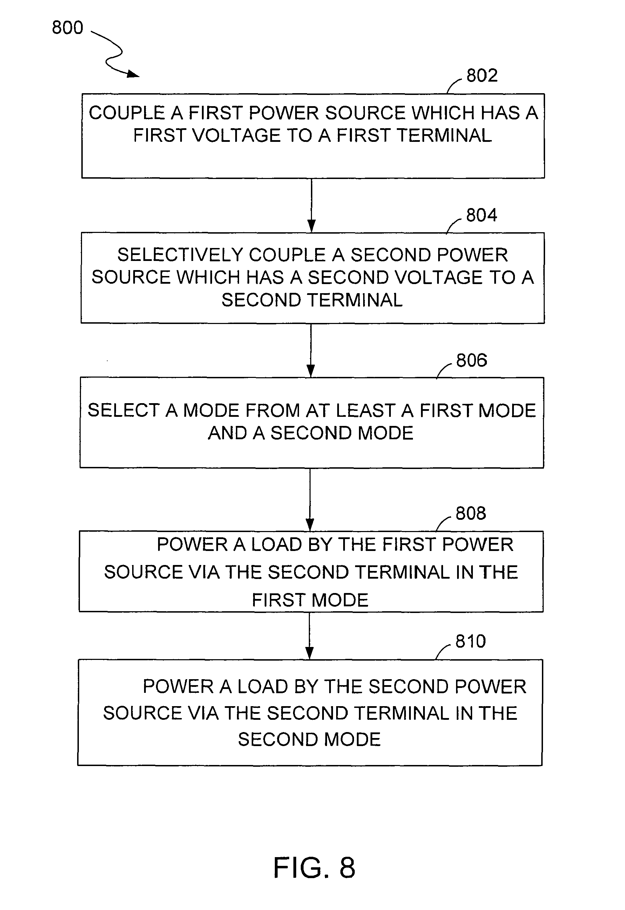

FIG. 8 shows a flowchart 800 of operations performed by a power management system, in accordance with one embodiment of the present invention. FIG. 8 is described in combination with FIG. 3, FIG. 4, FIG. 5A, FIG. 5B, and FIG. 6.

As shown in FIG. 8, a first power source 316 (e.g., battery pack) which has a first voltage V_{BAT} is coupled to a first terminal 314 in block 802. In block 804, a second power source 326 (e.g., an adapter or a universal serial bus device) which has a second voltage V_{AD} is selectively coupled to a second terminal 324. A switch 342 can be coupled between the second power source 326 and the second terminal 324.

In block 806, a mode can be selected from at least a first mode and a second mode. Advantageously, in the first mode, a power conversion stage 302 receives the first voltage V_{BAT} at the first terminal 314 and generates a step-up voltage at the second terminal 324. In one embodiment, the generated step-up voltage is greater than the first voltage V_{BAT}. In the second mode, the power conversion stage 302 receives the second voltage V_{AD} at the second terminal 324 and generates a step-down voltage at the first terminal 314 for charging the first power source 316. In one embodiment, the generated step-down voltage is less than the second voltage V_{AD}.

If the first mode is selected, in block 808, a load will be powered by the first power source 316 via the second terminal 324, in one embodiment. If the second mode is selected, in block 810, the load will be powered by the second power source 326 via the second terminal 324, in one embodiment.

Accordingly, the present invention provides a power management system which can work in different modes. In one such embodiment, a power conversion stage can be controlled by a controller to generate a step-down voltage at a first terminal of the power conversion stage or a step-up voltage at a second terminal of the power conversion stage. As such, a second power source (e.g., an adapter or a universal serial bus device) can charge a first power source (e.g., battery pack) via the power conversion stage. In one embodiment, the first power source (e.g., battery pack) can power a system load via the same power conversion stage even when a voltage of the first power source drops below a minimum required system voltage. Advantageously, no extra buck/boost converters may be required in the load systems, such that the cost of the power management system and the power loss caused by extra buck/boost converters can be reduced.

While the foregoing description and drawings represent embodiments of the present invention, it will be understood that various additions, modifications and substitutions may be made therein without departing from the spirit and scope of the principles of the present invention as defined in the accompanying claims. One skilled in the art will appreciate that the invention may be used with many modifications of form, structure, arrangement, proportions, materials, elements, and components and otherwise, used in the practice of the invention, which are particularly adapted to specific environments and operative requirements without departing from the principles of the present invention. The presently disclosed embodiments are therefore to be considered in all respects as illustrative and not restrictive, the scope of the invention being indicated by the appended claims and their legal equivalents, and not limited to the foregoing description.

## Claims

1. A power management system comprising:
a power conversion stage comprising a first terminal coupled to a first power source which has a first voltage and comprising a second terminal selectively coupled to a second power source which has a second voltage; and
a controller coupled to said power conversion stage operable for selecting a mode from at least a first mode and a second mode,
wherein in said first mode said power conversion stage receives said first voltage at said first terminal and generates a step-up voltage at said second terminal, and wherein in said second mode said power conversion stage receives said second voltage at said second terminal and generates a step-down voltage at said first terminal for charging said first power source, and wherein said step-up voltage is greater than said first voltage and said step-down voltage is less than said second voltage.

2. The power management system as claimed in claim 1, wherein said first power source comprises a battery pack comprising at least one battery cell.

3. The power management system as claimed in claim 1, wherein said second power source comprises an adapter.

4. The power management system as claimed in claim 1, wherein said second power source comprises a universal serial bus device.

5. The power management system as claimed in claim 1, wherein said power conversion stage comprises an inductor coupled to a capacitor.

6. The power management system as claimed in claim 1, wherein said step-up voltage is greater than a predetermined voltage.

7. The power management system as claimed in claim 1, wherein in said first mode said first power source powers a load coupled to said second terminal via said second terminal.

8. The power management system as claimed in claim 1, wherein in said second mode said second power source powers a load coupled to said second terminal via said second terminal.

9. The power management system as claimed in claim 1, wherein said controller selects said first mode when said first voltage is less than a predetermined threshold.

10. The power management system as claimed in claim 1, further comprising:
a switch coupled between said first power source and a load, and operable for selectively coupling said first power source to said load,
wherein said switch is controlled by said controller.

11. The power management system as claimed in claim 1, further comprising:
a switch coupled between said second power source and said second terminal and operable for selectively coupling said second power source to said second terminal,
wherein said switch is controlled by said controller.

12. The power management system as claimed in claim 1, wherein said power conversion stage further comprises a high side switch coupled to said second terminal and a low side switch coupled between said high side switch and ground, and wherein said high side switch and said low side switch are controlled by said controller.

13. A method for powering a load, comprising:
coupling a first power source which has a first voltage to a first terminal;
selectively coupling a second power source which has a second voltage to a second terminal; and
selecting a mode from at least a first mode and a second mode,
wherein in said first mode a power conversion stage receives said first voltage at said first terminal and generates a step-up voltage at said second terminal, and wherein in said second mode said power conversion stage receives said second voltage at said second terminal and generates a step-down voltage at said first terminal for charging said first power source, and wherein said step-up voltage is greater than said first voltage and said step-down voltage is less than said second voltage.

14. The method as claimed in claim 13, further comprising:
powering a load by said first power source via said second terminal in said first mode.

15. The method as claimed in claim 13, further comprising:
powering a load by said second power source via said second terminal in said second mode.

16. The method as claimed in claim 13, wherein said first power source comprises a battery pack having at least one battery cell.

17. The method as claimed in claim 13, wherein said second power source comprises an adapter.

18. The method as claimed in claim 13, wherein said second power source comprises a universal serial bus device.

19. The method as claimed in claim 13, wherein said power conversion stage comprises an inductor coupled to a capacitor.

20. An electronic device comprising:
a power conversion stage comprising a first terminal coupled to a first power source which has a first voltage and comprising a second terminal selectively coupled to a second power source which has a second voltage;
a load coupled to said second terminal and selectively coupled to said first terminal; and
a controller coupled to said power conversion stage operable for selecting a mode from at least a first mode, a second mode, and a third mode,
wherein in said first mode said power conversion stage receives said first voltage at said first terminal and generates a step-up voltage at said second terminal for powering said load, and wherein in said second mode said power conversion stage receives said second voltage at said second terminal and generates a step-down voltage at said first terminal for charging said first power source, and wherein in said third mode said first power source powers said load via said first terminal, and wherein said step-up voltage is greater than said first voltage and said step-down voltage is less than said second voltage.

21. The electronic device as claimed in claim 20, wherein said first mode is selected when said first voltage is less than a predetermined threshold, and wherein said third mode is selected when said first voltage is greater than said predetermined threshold.

22. The electronic device as claimed in claim 20, wherein said first power source comprises a battery pack comprising at least one battery cell.

23. The electronic device as claimed in claim 20, wherein said second power source comprises an adapter.

24. The electronic device as claimed in claim 20, wherein said second power source comprises a universal serial bus device.
